# FASCICULE DE BREVET EUROPEEN

(11) **EP 3 250 822 B1**
(45) Date de publication et mention de la délivrance du brevet: **13.03.2019**
(21) Numéro de dépôt: 16707851.8
(22) Date de dépôt: 28.01.2016
(51) Int. Cl.: F03H 1/00, B64G 1/40, H05H 1/54

(54) **PROPULSEUR À EFFET HALL ET ENGIN SPATIAL COMPRENANT UN TEL PROPULSEUR**
HALL-EFFEKT-ANTRIEB UND RAUMFAHRZEUG MIT DIESEM ANTRIEB
HALL EFFECT THRUSTER, AND SPACECRAFT INCLUDING SUCH A THRUSTER

(30) Priorité: 30.01.2015 FR 1550745
(43) Date de publication de la demande: 06.12.2017
(73) Titulaire: SAFRAN AIRCRAFT ENGINES, 75015 Paris (FR)
(72) Inventeur: MARCHANDISE, Frédéric Raphaël Jean, 27200 Vernon (FR); VIAL, Vanessa, 27200 Vernon (FR); ZURBACH, Stéphan, 27200 Vernon (FR)
(74) Mandataire: Duflos, Bertrand Guillaume
(86) Numéro de dépôt international: PCT/FR2016/050186
(87) Numéro de publication internationale: WO 2016/120570

(56) Documents cités:
- RU-C- 1 796 777
- US-A- 3 151 259
- US-A1- 2003 046 921
- US-A1- 2008 223 017
- L. Pekker ET AL: "Analysis of Air Breathing Hall Effect Thruster", 42nd AIAA Plasmadynamics and Laser Conference, Honolulu, HI , 25 mai 2011 (2011-05-25), pages 1-15, XP055212516, Extrait de l'Internet: URL:http://www.dtic.mil/dtic/tr/fulltext/u 2/a546855.pdf [extrait le 2015-09-10]

## Description

### DOMAINE DE L'INVENTION

La présente invention concerne le domaine des propulseurs à effet de Hall à alimentation atmosphérique.

### ARRIERE-PLAN TECHNOLOGIQUE

Habituellement, un propulseur à effet Hall à alimentation atmosphérique comprend :
une tuyère permettant la collecte, l'accélération et l'éjection de particules par le propulseur lorsque celui-ci est en fonctionnement ;
un circuit électrique comprenant une anode, une cathode en aval de l'anode, et une source de tension électrique pour émettre des électrons via la cathode et attirer des électrons via l'anode ;
un circuit magnétique pour générer un champ magnétique dans la tuyère axialement en aval de l'anode, le champ magnétique étant dirigé suivant une direction sensiblement radiale par rapport à l'axe de poussée.

Un tel propulseur est décrit par exemple par le document US2003/0046921.

En pratique, la tuyère est généralement de forme annulaire pour permettre au circuit magnétique de générer un champ magnétique radial. La tuyère comprend donc à la fois une paroi interne et une paroi externe ; le passage des particules se fait entre ces deux parois.

En particulier à cause de cette tuyère, l'espace interne d'un engin spatial comprenant un tel propulseur est particulièrement encombré.

### PRESENTATION DE L'INVENTION

Par suite, le but de l'invention est de proposer un propulseur à effet Hall présentant un encombrement réduit pour l'engin spatial sur lequel il est monté.

Cet objectif est atteint au moyen d'un propulseur à effet Hall pour développer une poussée suivant un axe de poussée, le propulseur comportant :
un circuit magnétique pour générer un champ magnétique ;
un circuit électrique comprenant une anode, une première cathode, et une source de tension électrique pour émettre des électrons au moins via la première cathode et attirer des électrons via l'anode ;
le propulseur se caractérisant en ce que :
le propulseur est agencé à l'intérieur d'une paroi cylindrique formée autour de l'axe de poussée ;
le circuit magnétique et le circuit électrique sont agencés de manière à générer des champs magnétique et électrique autour de la paroi ; et
dans toute coupe parallèle à l'axe de poussée et perpendiculaire à la paroi :
   - le circuit magnétique présente un pôle magnétique amont et un pôle magnétique aval, disposés sensiblement à la surface de la paroi à distance l'un de l'autre ; et
   - l'anode et la première cathode sont situées de part et d'autre du pôle magnétique amont.

La paroi mentionnée précédemment est naturellement la paroi externe de l'engin spatial sur lequel le propulseur est monté.

Il s'agit le plus souvent d'une paroi axisymétrique.

Cette paroi peut notamment être une paroi cylindrique. Par 'paroi cylindrique', on entend ici une paroi dont la surface est engendrée par le déplacement d'une droite (dite génératrice) de direction fixe suivant un contour fermé.

La poussée développée par le propulseur est généralement orientée suivant la direction de symétrie de la paroi.

Cependant, dans un mode de réalisation, le circuit magnétique et/ou le circuit électrique est ou sont agencé(s) de manière à générer autour de la paroi un champ magnétique (B) et/ou électrique (E) non axisymétrique. La poussée engendrée par le propulseur présente alors une composante latérale par rapport à l'axe du propulseur (défini par la paroi cylindrique) ; elle est donc orientée suivant une direction légèrement inclinée par rapport à la direction de l'axe de la paroi cylindrique.

Le contour fermé peut être en forme de cercle, d'ellipse, d'ovale et par exemple en forme d'hippodrome, etc.

L'invention consiste donc à inverser radicalement la conception d'un propulseur à effet Hall en organisant l'accélération des particules non pas à l'intérieur d'une tuyère - et donc au coeur de l'engin spatial - mais au contraire à l'extérieur de celui-ci.

Conformément à l'invention, le champ magnétique généré par le circuit magnétique piège les électrons sur toute la circonférence de l'engin ; il peut cependant être d'intensité variable en fonction de la position sur la circonférence.

Le circuit magnétique est généralement agencé de telle sorte que le champ magnétique soit orienté suivant une direction globalement perpendiculaire à la surface de la paroi, au droit du pôle magnétique amont.

L'angle entre la paroi et les lignes de champ magnétique peut être légèrement différent de 90° ; il suffit en fait qu'il soit compris entre 75° et 105°.

Conformément à l'invention, le circuit électrique et le circuit magnétique sont donc profondément modifiés par rapport aux propulseurs de conception antérieure. Le principe de fonctionnement du moteur à effet Hall reste cependant sensiblement identique à celui des propulseurs à effet Hall antérieurs.

Dans un mode de réalisation, le circuit électrique comporte en outre au moins une autre cathode, disposée axialement en aval du pôle magnétique aval. Cette autre cathode permet de fournir des électrons aux particules libérées en aval de l'engin spatial, pour assurer la neutralité électrique de celles-ci.

L'invention concerne également un engin spatial incorporant au moins un propulseur à effet Hall tel que défini précédemment.

### BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux figures annexées :
- La figure 1 est une vue en coupe partielle d'un engin spatial intégrant un propulseur conforme à l'invention ; et
- La figure 2 est une vue en perspective partielle de l'engin spatial représenté sur la figure 1.

### DESCRIPTION DETAILLEE DE L'INVENTION

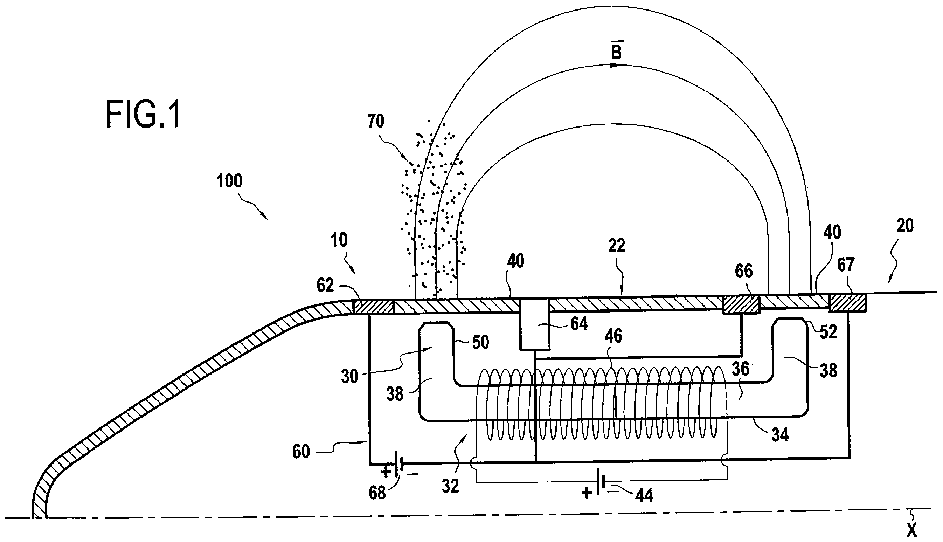

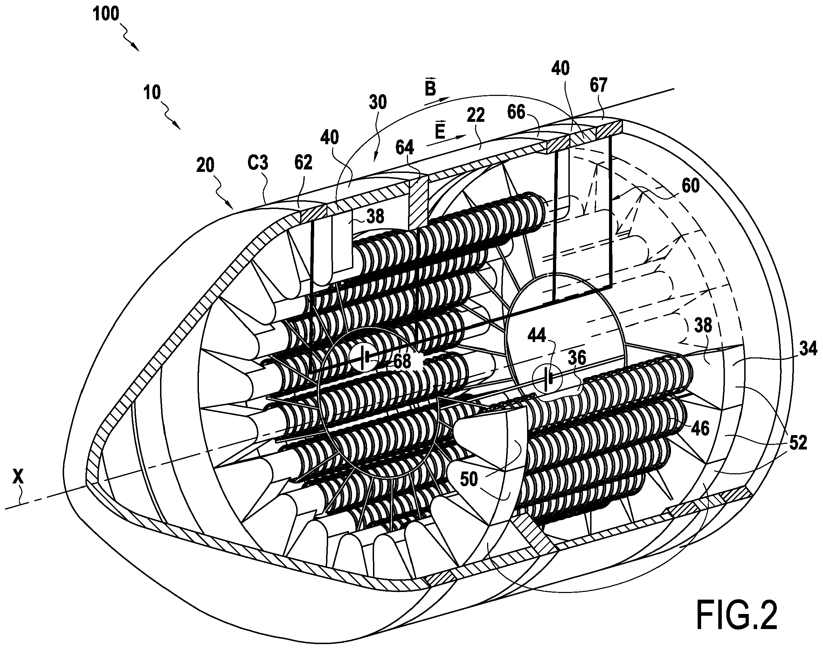

Les figures 1 et 2 représentent un engin spatial 100, en l'occurrence un satellite, comportant un propulseur 10 à effet Hall selon l'invention.

Ce satellite est un satellite qui a vocation à évoluer dans l'atmosphère terrestre en demeurant entre 100 et 300 km d'altitude.

Avantageusement, cette altitude est relativement basse, ce qui permet que certains équipements (équipements de communication, caméras, etc.) aient une taille et donc une masse relativement faibles. Inversement, à cette altitude l'atmosphère terrestre oppose une résistance faible, mais non nulle, au passage du satellite. Il est donc nécessaire de compenser la traînée induite.

La fonction du propulseur 10 est fournir une poussée au satellite, permettant de maintenir celui-ci en fonctionnement à l'altitude souhaitée.

Il permet également d'assurer des changements ou des corrections d'orbites.

Avantageusement, un propulseur suivant l'invention comme par exemple le propulseur 10, couplé à des moyens d'alimentation en énergie électrique comme des panneaux solaires, est en mesure de fournir sur de très longues durées la poussée nécessaire au maintien en altitude du satellite.

Le satellite 100 est agencé dans un carter de protection extérieur 20 qui a globalement une forme de révolution autour d'un axe X. Le propulseur 10 est agencé à l'intérieur de la paroi externe 22 du carter 20 ; la plus grande partie de cette paroi 22 est de forme extérieure cylindrique.

Dans le mode de réalisation présenté, le propulseur 10 a une structure axisymétrique autour de l'axe X. Les termes « amont » et « aval », dans le présent contexte, sont définis par rapport au sens de déplacement normal du satellite et donc du propulseur.

Le propulseur 10 comporte un circuit magnétique 30 et un circuit électrique 60.

Le circuit magnétique 30 est agencé de manière à créer un champ magnétique globalement radial au niveau (axialement, par référence à l'axe X) de la partie amont de la paroi 22.

Pour cela, il comporte une pluralité de circuits magnétiques élémentaires identiques 32, répartis de manière axisymétriques autour de l'axe X.

Chaque circuit 32 comporte un noyau en fer doux 34 qui dans une coupe axiale a une forme de U. Le noyau 34 comporte une longue tige 36 qui s'étend parallèlement à l'axe X à proximité de la paroi 22 (à proximité de celle-ci). Il comporte également deux tronçons coudés 38 qui sont coudés vers la paroi 22, de telle sorte que l'extrémité de ces tronçons soit disposée juste sous la surface de la paroi 22. En regard de ces tronçons 38, l'enveloppe 20 comporte des bagues 40 en matériau isolant électrique amagnétique, afin de permettre le passage du champ magnétique. Les bagues 40 peuvent par exemple être en céramique, en carbone cubique polycrystallin (plus connu sous le nom de diamant) ou en alumine.

Chaque circuit 32 comporte également une bobine 46 formant un solénoïde agencé autour de la tige 36.

Les bornes des bobines 46 des circuits 32 sont reliées à celles d'une source de tension 44. Cette source de tension est choisie de telle sorte que sous l'effet de la tension appliquée aux bobines 46, un champ magnétique stable B puisse être créé autour de la paroi. Une source de courant peut aussi être utilisée.

Lorsqu'une tension est appliquée par la source de tension 44 aux bobines 46, chaque circuit magnétique 32 génère un champ magnétique B. Ce champ est rayonné par le circuit 32 à l'extérieur du satellite 100 dans l'espace au droit du satellite. Les lignes de champ formées sont représentées sur la figure 1. Comme le montre cette figure, les extrémités des tronçons coudés 38 forment donc des pôles magnétiques pour les circuits 32, à savoir un pôle magnétique amont 50 et un pôle magnétique aval 52.

Au droit du pôle magnétique amont 50, le champ magnétique B est orienté suivant une direction sensiblement perpendiculaire à la surface de la paroi 22.

Comme on peut le voir sur la figure, les pôles magnétiques amont de deux circuits magnétiques élémentaires 32 adjacents sont formés de manière à être proches l'un de l'autre, ou même si possible à être en contact. Il en va de même pour les pôles magnétiques aval. Cela permet que le circuit magnétique présente un pôle magnétique amont et un pôle magnétique aval dans tout plan axial, qui génèrent le champ magnétique. Grâce à cela, le champ magnétique B est généré de manière sensiblement uniforme sur toute la périphérie de la paroi 22.

Dans un autre mode de réalisation, chaque circuit 32 peut être constitué essentiellement par un aimant ayant sensiblement la même forme que le noyau en fer doux 34. Il n'est alors plus nécessaire de prévoir des bobines 46 et une source de tension 44 alimentant celles-ci pour générer le champ magnétique B autour du propulseur 10.

Le propulseur 10 comprend aussi un circuit électrique 60. Ce circuit comprend une anode 62, une première cathode 64, une deuxième cathode 66, une troisième cathode 67 (ou cathode supplémentaire) et une source de tension électrique 68 reliant l'anode 62 à la première (64), à la deuxième (66) et à la troisième cathode (67).

L'anode 62 est réalisée dans un matériau conducteur de l'électricité, et plutôt amagnétique, comme par exemple le carbone graphite, l'acier inoxydable ou encore un autre métal.

Les cathodes sont prévues pour émettre des électrons, peuvent être dans l'un des matériaux suivants : hexaborure de lanthane (LaB6), WBa (tungstène imprégné de Baryum), ...

Il n'est pas nécessaire que les cathodes aient une forme d'anneau ; elles peuvent aussi être des cathodes ponctuelles (cathodes creuses). En effet, la distance topologique magnétique dépend des lignes de champ et non des distances physiques. Si une cathode est une cathode ponctuelle (cathode creuse), l'anneau 64 n'a pas de fonction spécifique dans le circuit électrique ; on peut utiliser simplement un matériau conducteur en surface pour éviter les accumulations de charges électrostatiques, comme pour la paroi 22.

L'anode 62 est située axialement en amont du pôle magnétique amont 50. La première cathode 64 est située en aval du pôle magnétique amont 50 mais au voisinage de celui-ci (et de préférence au voisinage immédiat de celui-ci) et donc à une certaine distance en amont du pôle magnétique aval 52.

La deuxième cathode 66 est située entre le pôle magnétique amont 50 et le pôle magnétique aval 52.

Elle est donc en aval du pôle magnétique amont 50, et en amont du pôle magnétique aval 52.

La troisième cathode 67 est située en aval du pôle magnétique aval 52.

Chacune des cathodes 66 et 67 est de plus située à proximité du pôle magnétique aval 52, et donc à une certaine distance en aval de la première cathode 64.

Bien que le circuit 60 comporte trois cathodes 64,66 et 67, dans d'autres modes de réalisation, seule une cathode peut être prévue, ou encore seulement deux cathodes peuvent être prévues. La position de cette cathode ou les positions de ces deux cathodes peut ou peuvent être choisie(s) librement parmi les positions des cathodes 64, 66 et 67.

L'anode 62, ainsi que la première, deuxième et la troisième cathode 64, 66, 67 sont chacune en forme d'anneau. Chacun de ces anneaux s'étend sur toute la circonférence de la paroi 22 globalement dans un plan perpendiculaire à l'axe X (ou plus précisément, entre deux plans rapprochés perpendiculaires à l'axe X). Chacun de ces anneaux affleure à la surface de la paroi 22 et constitue ainsi une portion de cette paroi.

Lorsqu'une tension appliquée par la source de tension 68 entre l'anode 62 et les cathodes 64, 66 et 67, un champ électrique E se forme dans l'espace extérieur au satellite, autour de la paroi 22 entre l'anode 62 et la première cathode 64. Ce champ est orienté sensiblement suivant une direction parallèle à l'axe X.

Inversement, le champ électrique E est extrêmement faible au voisinage du pôle magnétique aval 52. Par suite, la force générée par le propulseur 10 est créée au voisinage du pôle magnétique amont 50, mais en l'absence de champ électrique E, quasiment aucune force inverse n'est générée au voisinage du pôle magnétique aval 52.

Il faut noter enfin que la source de tension 68 est commandable (bien que cela ne soit pas représenté sur les figures) : sa tension électrique peut être inversée afin d'inverser la poussée du propulseur.

Ses deux pôles en effet peuvent être inversés sur commande afin d'inverser, si on le souhaite, la tension appliquée entre l'anode et les première et deuxième cathodes. Cette inversion permet d'inverser le sens de la force appliquée par le propulseur 10, par exemple pour freiner le satellite 100 lors d'une rentrée dans l'atmosphère.

Les rôles de l'anode et de la cathode sont alors inversés, si leur nature le permet.

Dans un autre mode de réalisation, il est possible de prévoir une cathode en amont du pôle 50 et une anode en aval de celui-ci, auxquelles la source de tension 68 est connectée en mode d'inversion de poussée.

Cette cathode et cette anode sont alors utilisées en mode d'inversion de poussée en lieu et place de l'anode 62 et des cathodes 64, 66 et 67.

Le propulseur 10 fonctionne de la manière suivante.

Une tension électrique, typiquement de l'ordre de 150 à 800 V est établie entre les cathodes 64, 66 et 67 en aval et l'anode 62 en amont. Les cathodes 64, 66 et 67 commencent alors à émettre des électrons. Ceux-ci sont en grande partie piégés dans une enceinte magnétique formée par le champ magnétique créé par le circuit magnétique 30, adaptée aux performances souhaitées, et qui peut être typiquement de l'ordre de 100 à 300 gauss. Les électrons piégés dans cette enceinte magnétique vont ainsi former une grille cathodique virtuelle 70. Cependant, certains électrons hautement énergétiques (typiquement 10 à 40 eV) échappent à l'enceinte magnétique 70 et rejoignent l'anode 62.

Du fait du déplacement relatif du satellite 100 par rapport à l'atmosphère, à chaque instant des particules pénètrent dans la grille cathodique virtuelle 70. Les impacts entre les électrons retenus dans cette grille et les atomes de ces particules provoquent l'ionisation de celles-ci. Les particules ionisées, sous l'effet du champ électrique E créé par le circuit électrique 60, sont alors accélérées vers l'arrière du satellite. Le propulseur 10 génère donc un jet plasmique qui est éjecté à une vitesse extrêmement élevée suivant la direction X, vers l'arrière du satellite, en aval de la paroi 22. Pour des raisons de symétrie, la poussée générée est sensiblement alignée avec l'axe central X.

Selon le sens donné à la tension par la source de tension 68, la force générée par le propulseur 10 peut être dans un sens ou dans l'autre, suivant la direction X.

Lorsque le propulseur 10 est en fonctionnement, la deuxième et la troisième cathode 66 et 67 fournissent des électrons aux particules libérées en aval du satellite 100, et assurent ainsi la neutralité électrique de celles-ci.

L'utilisation de la deuxième cathode, particulièrement, est optionnelle. C'est principalement la troisième cathode 67, située en aval du pôle magnétique aval 52, qui fournit les électrons nécessaires à la neutralisation des particules accélérées par le propulseur 10.

Avantageusement, le propulseur selon l'invention ne nécessite pas d'alimentation en gaz propulsif, contrairement à la plupart des propulseurs à effet Hall.

De plus, son agencement sur la paroi extérieure du satellite libère une grande partie de l'espace intérieur du satellite, ce qui permet d'y disposer une charge utile importante.

Notons enfin que le propulseur peut être agencé de manière non axisymétrique, tout en restant dans le cadre de l'invention. Les bobines 46 peuvent notamment ne pas être identiques. Elles peuvent par exemple être agencées de telle manière que le champ magnétique soit plus intense sur un côté de la paroi que sur le côté opposé. Dans ce cas, la poussée générée par le propulseur ne sera pas dirigée suivant l'axe de la paroi, mais sera orientée légèrement de biais par rapport à celui-ci.

## Revendications

1. Propulseur (10) à effet Hall pour développer une poussée suivant un axe de poussée (X), et comportant :
un circuit magnétique (30) pour générer un champ magnétique (B) ; et
un circuit électrique (60) comprenant une anode (62), une première cathode (64), et une source de tension électrique (68) pour émettre des électrons au moins via la première cathode (64) et attirer des électrons via l'anode (62) ;
**caractérisé en ce que**
le propulseur est agencé à l'intérieur d'une paroi (22) formée autour de l'axe de poussée (X) ;
le circuit magnétique et le circuit électrique sont agencés de manière à générer des champs magnétique (B) et électrique (E) autour de la paroi (22) ; et
dans toute coupe parallèle à l'axe de poussée et perpendiculaire à la paroi :
le circuit magnétique (30) présente un pôle magnétique amont (50) et un pôle magnétique aval (52), disposés sensiblement à la surface de la paroi à distance l'un de l'autre ; et
l'anode (62) et la première cathode (64) sont situées de part et d'autre du pôle magnétique amont (50).

2. Propulseur (10) selon la revendication 1, dont le circuit magnétique est agencé de telle sorte que le champ magnétique (B) soit orienté suivant une direction globalement perpendiculaire à la surface de la paroi, au droit du pôle magnétique amont (50)

3. Propulseur (10) selon la revendication 1 ou 2, dans lequel le circuit électrique (60) comporte en outre une deuxième cathode (66), disposée axialement entre le pôle magnétique amont (50) et le pôle magnétique aval (52).

4. Propulseur (10) selon l'une quelconque des revendications 1 à 3, dans lequel le circuit électrique (60) comporte en outre une cathode supplémentaire (67), disposée axialement en aval du pôle magnétique aval (52).

5. Propulseur (10) selon l'une quelconque des revendications 1 à 4, dont la source de tension électrique (68) est commandable, une tension de celle-ci pouvant être inversée afin d'inverser une poussée du propulseur.

6. Propulseur (10) selon l'une quelconque des revendications 1 à 5, dont le circuit magnétique (30) et/ou le circuit électrique (60) est ou sont agencé(s) de manière à générer autour de la paroi un champ magnétique (B) et/ou électrique (E) non axisymétrique.

7. Engin spatial (100) incorporant au moins un propulseur (10) à effet Hall suivant l'une quelconque des revendications 1 à 6.

## Patentansprüche

1. Hall-Effekt-Antrieb (10) zur Entwicklung eines Schubs entlang einer Schubachse (X), umfassend:
einen Magnetkreis (30) zur Erzeugung eines Magnetfelds (B), und
einen elektrischen Kreis (60) umfassend eine Anode (62), eine erste Kathode (64) und eine elektrische Spannungsquelle (68) zum Aussenden von Elektronen zumindest über die erste Kathode (64) und zum Anziehen der Elektronen über die Anode (62),
**dadurch gekennzeichnet, dass**
der Antrieb innerhalb einer Wand (22) angeordnet ist, die um die Schubachse (X) herum ausgebildet ist,
der Magnetkreis und der elektrische Kreis auf solche Weise angeordnet sind, dass sie ein Magnet- (B) und ein elektrisches Feld (E) um die Wand (22) herum erzeugen, und
in jedem zur Schubachse parallelen und senkrecht auf die Wand stehenden Schnitt:
der Magnetkreis (30) einen stromaufwärts gelegenen Magnetpol (50) und einen stromabwärts gelegenen Magnetpol (52) aufweist, die im Wesentlichen auf der Oberfläche der Wand in einem Abstand voneinander angeordnet sind, und
die Anode (62) und die erste Kathode (64) sich zu beiden Seiten des stromaufwärts gelegenen Magnetpols (50) befinden.

2. Antrieb (10) nach Anspruch 1, dessen Magnetkreis auf solche Weise angeordnet ist, dass das Magnetfeld (B) entlang einer Richtung orientiert ist, die im Allgemeinen senkrecht auf die Oberfläche der Wand steht, direkt unter dem stromaufwärts gelegenen Magnetpol (50).

3. Antrieb (10) nach Anspruch 1 oder 2, wobei der elektrische Kreis (60) ferner eine zweite Kathode (66) umfasst, die axial zwischen dem stromaufwärts gelegenen Magnetpol (50) und dem stromabwärts gelegenen Magnetpol (52) angeordnet ist.

4. Antrieb (10) nach einem der Ansprüche 1 bis 3, wobei der elektrische Kreis (60) ferner eine zusätzliche Kathode (67) umfasst, die axial stromabwärts von dem stromabwärts gelegenen Magnetpol (52) angeordnet ist.

5. Antrieb (10) nach einem der Ansprüche 1 bis 4, dessen elektrische Spannungsquelle (68) steuerbar ist, wobei ihre Spannung umgekehrt werden kann, um einen Schub des Antriebs umzukehren.

6. Antrieb (10) nach einem der Ansprüche 1 bis 5, dessen Magnetkreis (30) und/oder der elektrische Kreis (60) auf solche Weise angeordnet ist/sind, dass ein nicht achsensymmetrisches Magnet- (B) und/oder elektrisches Feld (E) um die Wand herum erzeugt wird.

7. Raumfahrzeug (100), das zumindest einen Hall-Effekt-Antrieb (10) nach einem der Ansprüche 1 bis 6 umfasst.

## Claims

1. A Hall effect thruster (10) for developing thrust along a thrust axis (X) and comprising:
- a magnetic circuit (30) for generating a magnetic field (B); and
- an electric circuit (60) comprising an anode (62), a first cathode (64), and a voltage source (68) for emitting electrons via at least the first cathode (64) and attracting electrons via the anode (62);
the thruster being **characterized in that**:
- it is arranged inside a wall (22) formed around the thrust axis (X);
- the magnetic circuit and the electric circuit are arranged so as to generate magnetic and electric fields (B, E) around the wall (22); and
- in all sections parallel to the thrust axis and perpendicular to the wall:
- the magnetic circuit (30) presents an upstream magnetic pole (50) and a downstream magnetic pole (52) arranged substantially at the surface of the wall and spaced apart from each other; and
- the anode (62) and the first cathode (64) are situated on either side of the upstream magnetic pole (50) .

2. A thruster (10) according to claim 1, wherein the magnetic circuit is arranged in such a manner that the magnetic field (B) is oriented in a direction that is generally perpendicular to the surface of the wall, beside the upstream magnetic pole (50).

3. A thruster (10) according to claim 1 or claim 2, wherein the electric circuit (60) also includes a second cathode (66) arranged axially between the upstream magnetic pole (50) and the downstream magnetic pole (52°) .

4. A thruster (10) according to any one of claims 1 to 3, wherein the electric circuit (60) also includes an additional cathode (67) arranged axially downstream from the downstream magnetic pole (52).

5. A thruster (10) according to any one of claims 1 to 4, in which the voltage source (68) is controllable, it being possible to reverse the voltage of the source in order to reverse the thrust of the thruster.

6. A thruster (10) according to any one of claims 1 to 5, in which the magnetic circuit (30) and/or the electric circuit (60) is/are arranged in such a manner as to generate a non-axisymmetric magnetic and/or electric field (B and/or E) around the wall.

7. A space vehicle (100) including at least one Hall effect thruster (10) according to any one of claims 1 to 6.
